(19) **Europäisches Patentamt**
**European Patent Office**
**Office européen des brevets**

(11) **EP 4 594 952 B1**

(12) **EUROPEAN PATENT SPECIFICATION**

(45) Date of publication and mention
of the grant of the patent:
**20.05.2026   Bulletin 2026/21**

(21) Application number: **23782453.7**

(22) Date of filing: **26.09.2023**

(51) International Patent Classification (IPC):
***G06N 10/40*** *(2022.01)*

(52) Cooperative Patent Classification (CPC):
**G06N 10/40**

(86) International application number:
**PCT/EP2023/076545**

(87) International publication number:
**WO 2024/068630 (04.04.2024 Gazette 2024/14)**

(54) **QUANTUM COMPUTING ARRANGEMENT AND QUANTUM COMPUTER**

QUANTENCOMPUTERANORDNUNG UND QUANTENCOMPUTER

AGENCEMENT INFORMATIQUE QUANTIQUE ET ORDINATEUR QUANTIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **26.09.2022   DE 102022124674**

(43) Date of publication of application:
**06.08.2025   Bulletin 2025/32**

(73) Proprietor: **eleQtron GmbH**
**57072 Siegen (DE)**

(72) Inventors:
• **JOHANNING, Michael**
**57076 Siegen (DE)**
• **BOCK, Sebastian**
**10407 Berlin (DE)**
• **YAGHOUBI, Pedram**
**57072 Siegen (DE)**
• **HUBER, Patrick**
**57562 Herdorf (DE)**
• **BARTHEL, Patrick**
**57299 Burbach (DE)**
• **WUNDERLICH, Christof**
**57076 Siegen (DE)**
• **SRIARUNOTHAI, Theeraphot**
**57072 Siegen (DE)**
• **BOLDIN, Ivan**
**57072 Siegen (DE)**
• **SIEBENEICH, Hendrik**
**57072 Siegen (DE)**

• **KÖPPEN, Florian**
**57072 Siegen (DE)**

(74) Representative: **Epping - Hermann - Fischer
Patentanwaltsgesellschaft mbH
Schloßschmidstraße 5
80639 München (DE)**

(56) References cited:
**US-A1- 2021 319 999**

• YUJI KAWAI ET AL: "Surface-electrode trap with
an integrated permanent magnet for generating a
magnetic-field gradient at trapped ions",
JOURNAL OF PHYSICS B, ATOMIC MOLECULAR
AND OPTICAL PHYSICS, INSTITUTE OF
PHYSICS PUBLISHING, BRISTOL, GB, vol. 50,
no. 2, 22 December 2016 (2016-12-22), pages
25501, XP020312563, ISSN: 0953-4075, [retrieved
on 20161222], DOI: 10.1088/1361-6455/50/2/
025501
• RICHARD C THOMPSON: "Ion Coulomb
Crystals", ARXIV.ORG, CORNELL UNIVERSITY
LIBRARY, 201 OLIN LIBRARY CORNELL
UNIVERSITY ITHACA, NY 14853, 18 November
2014 (2014-11-18), XP091291216, DOI: 10.1080/
00107514.2014.989715

EP 4 594 952 B1

- KUNLING WANG ET AL: "Quantum gates using electronic and nuclear spins of Yb^+ in a magnetic field gradient", ARXIV.ORG, CORNELL UNIVERSITY LIBRARY, 201 OLIN LIBRARY CORNELL UNIVERSITY ITHACA, NY 14853, 2 January 2011 (2011-01-02), XP080471139, DOI: 10.1140/EPJD/E2011-20108-2

- HENNING HAHN ET AL: "Multilayer ion trap with three-dimensional microwave circuitry for scalable quantum logic applications", ARXIV.ORG, CORNELL UNIVERSITY LIBRARY, 201 OLIN LIBRARY CORNELL UNIVERSITY ITHACA, NY 14853, 6 July 2021 (2021-07-06), XP081997762, DOI: 10.1007/S00340-019-7265-1

**Description**

The present disclosure relates to a quantum computing arrangement and a quantum computer.

Document Yuji Kawai et al., "Surface-electrode trap with an Integrated permanent magnet for generating a magnetic-field gradient at trapped ions", 22-12-2016, describes the use of a permanent magnet arrangement in a surface-electrode trap.

Document Richard C Thompson, "Ion Coulomb Crystals", 18-11-2014, describes of an ion trap providing an ion coulomb crystal.

Document Kunling Wang et al., "Quantum gates using electronic and nuclear spins of YbA+ in a magnetic field gradient", 02-01-2011, describes a permanent magnet arrangement for producing a magnetic field gradient.

Document US 2021/319999 A1, 14-10-2021, describes apparatuses, systems, and methods for ion traps.

In many quantum computing processes using quantum computing arrangements, the arrangements are configured to trap quantum particles, like ions. During operation, the trapped quantum particles form quantum bits, qubits for short. The trapped quantum particles have to be controlled and manipulated in order to perform calculations. For the trapped quantum particles, an interaction as e.g. Coulomb repulsion may create a coupling of neighbouring trapped quantum particles and, thus, enables entanglement. In order to perform quantum computing processes using the trapped quantum particles, the trapped quantum particles have to be controllable and addressable individually from one another.

An individual addressing of a plurality of trapped quantum particles, e.g. a quantum bit register, is desirable with negligible crosstalk. However, crosstalk between neighbouring trapped quantum particles is typically a difficult source of error to control in quantum computer processes and can prevent meaningful application of quantum error correction protocols and thus scalability.

Therefore, one object to be achieved is to provide an improved quantum computing arrangement, for instance a quantum computing arrangement which is compact in design and/or easy to manufacture and/or allows for an improved controllability. A further object to be achieved is to provide a quantum computer with such a quantum computing arrangement.

These objects are solved, inter alia, by the subject matter of claim 1 and claim 15.

Advantageous embodiments and further developments are subject of the dependent claims and can also be extracted from the following description and the figures. Firstly, the quantum computing arrangement is specified.

The quantum computing arrangement comprises a permanent magnet arrangement. For example, the permanent magnet arrangement is symmetric, particularly geometrically symmetric, with respect to a symmetry plane. This means that the geometry or shape, respectively, of the permanent magnet arrangement is symmetric with respect to the symmetry plane. The geometry of the permanent magnet arrangement may also have a rotational symmetry, e.g. an n-fold rotational symmetry with n being at least 3 or at least 4 or at least 6 or at least 8.

The quantum computing arrangement comprises a substrate. The substrate may be an electrically isolating substrate. The substrate may comprise or consist of sapphire or diamond or a ceramic, like AIN.

The quantum computing arrangement is configured to realize a planar Paul trap for trapping at least one ion crystal having several ions lined up along a predefined line. In other words, during operation, the quantum computing arrangement, i.e. at least a portion thereof, constitutes a planar Paul trap. A Paul trap is also known as quadrupole ion trap or radio frequency (RF) trap. It is a type of an ion trap that uses dynamic electric fields to trap charged particles.

The planar Paul trap is configured to trap at least one ion crystal with 2 or more, e.g. at least 8 or at least 20 or at least 100 and/or at most 1000 ions lined up along the predefined line.

Components of the quantum computing arrangement which constitute electrodes of the planar Paul trap for producing an electrical trapping potential, in the following simply referred to as electrodes of the planar Paul trap, are arranged on a top side of the substrate. Particularly, all electrodes of the planar Paul trap with which the electrical trapping potential is produced are arranged on the top side of the substrate.

For example, the top side of the substrate is a planar top side. The substrate may be part of the planar Paul trap. The electrodes may be applied to the substrate by means of a deposition method, like sputtering or evaporation. The thickness of the electrodes may be increased by using a galvanic process. The substrate may mechanically stabilize the electrodes. Between the electrodes and the top side, there may be an adhesion layer for improving the adhesion of the electrodes to the top side.

For example, the planar Paul trap comprises at least two RF-electrodes, at least two DC-electrodes and at least two end-cap electrodes. All of these electrodes may be arranged in a common electrode plane.

The electrodes of the planar Paul trap may be different from the permanent magnet arrangement. Therefore, the planar Paul trap may be a separate device of the quantum computing arrangement being different from the permanent magnet arrangement. Alternatively, one or more components of the permanent magnet arrangement also form electrodes of the planar Paul trap so that the planar Paul trap is at least partially formed by the permanent magnet arrangement.

During operation, the electrodes of the planar Paul trap create an oscillating electrical potential configured to trap at least one ion crystal with several ions lined up in directions parallel to the predefined line and in directions perpendicular to the predefined line, herein also referred to as radial directions. Effectively, at least one electrical potential well is created in which the ions are trapped in all spatial directions and which is formed such that the ions arrange along the predefined line one behind the other, e.g. in a linear arrangement. A plurality of ions trapped in the same electrical potential well is herein referred to as an ion crystal.

The predefined line, also called trap line, is defined by the electrical potential produced by the planar Paul trap and, thus, is dependent on the geometry of the planar Paul trap. The trapped ions are arranged along the predefined line. For example, each of the ions of the at least one ion crystal intersects with the predefined line and/or oscillates around the predefined line. In other words, in the Paul trap, the ions of the at least one ion trap are arranged in an ion chain extending along the predefined line. The predefined line may be parallel to the top side of the substrate.

Each electrode may be formed as a plate or sheet or a film. Main extension planes of the electrodes run parallel to the top side, for example.

The electrodes may each be formed of metal. For example, they are formed of Au or of another material, like Cu. In this case, the electrodes may be coated with Au. Each electrode is, in particular, a contiguous metal element without interruptions. For example, the extensions of the electrodes along their respective main extension plane are at most 300 mm or at most 50 mm or at most 10 mm or at most 1 mm. The thicknesses of the electrodes measured perpendicularly to the main extension plane is, for example, at most 100 $\mu$m or at most 50 $\mu$m.

Besides the electrodes for the Paul trap, the quantum computing arrangement may comprise components for powering the electrodes, like a power supply and/or control units.

The quantum computing arrangement is configured such that the predefined line is located above the top side, i.e. offset from the top side and offset of the substrate. Particularly, the predefined line may be arranged above the electrodes of the planar Paul trap. This means that, during operation, the ions float above the top side or above the electrodes of the planar Paul trap, respectively. For example, in a direction perpendicular to the top side, all electrodes of the Paul trap are either arranged in front of or behind the predefined line, i.e. in front of or behind the ions.

By way of example, an average distance between the top side and the predefined line measured in a direction perpendicular to the top side is at least 20 $\mu$m or at least 100 $\mu$m. Additionally or alternatively, the minimum distance is at most 500 $\mu$m or at most 200 $\mu$m.

The permanent magnet arrangement establishes a magnetic field. The magnitude of the magnetic field thereby changes along the predefined line.

The magnetic field is herein understood to be the magnetic flux density. Accordingly, the magnitude of the magnetic field is the absolute value of the magnetic flux density.

The magnetic field created by the permanent magnet arrangement is or comprises, for example, a magnetic quadrupole field. Also higher multipole moments may exist. In a center of the magnetic field, the absolute value of the magnetic field may be zero. The center of the magnetic field may coincide with a geometrical center of the permanent magnet arrangement and/or the planar Paul trap. For example, the center of the magnetic field lies in the symmetry plane of the permanent magnet arrangement and/or on the predefined line. The magnetic field may be point symmetric with respect to its center.

The magnitude of the magnetic field changes along the predefined line. This means that the magnitudes of the magnetic field at different positions on the predefined line are different from each other. The change of the magnitude of the magnetic field along the predefined line is herein also referred to as gradient of the magnetic field along the predefined line.

The change of the magnitude of the magnetic field may be monotone, e.g. strictly monotone, at least in sections. For example, starting from the center of the magnetic field, the change of the magnetic field may be monotone or strictly monotone in both directions along the predefined line. The direction of the magnetic field may change along the predefined line or may stay constant along the predefined line.

In at least one embodiment, the quantum computing arrangement comprises a permanent magnet arrangement and a substrate. The quantum computing arrangement is configured to realize a planar Paul trap for trapping at least one ion crystal having ions lined up along a predefined line. Components of the quantum computing arrangement which constitute electrodes of the planar Paul trap for establishing an electrical trapping potential are arranged on a top side of the substrate. The predefined line is located above the top side. The permanent magnet arrangement establishes a magnetic field with a magnitude of the magnetic field changing along the predefined line.

Trapped ions provide excellent quantum systems for quantum control and metrology. In the present invention, they are stored in a planar Paul trap and form at least one ion crystal orientated along a predefined line. For quantum computing with trapped ions, as well as for certain tasks in metrology, individual control over single ions is desirable. When ions are manipulated by RF radiation, this single ion control cannot be achieved by focusing radiation as the wavelength normally exceeds the ion separation in the ion crystal by orders of magnitude. Also, the coupling of the internal and external quantum states, quantified by the Lamb-Dicke parameter, cannot be achieved by RF radiation.

The present invention is, inter alia, based on the idea to use an inhomogeneous magnetic field provided by a permanent magnet arrangement. This provides the possibility to individually address the ions in the frequency space by means of RF radiation. On the other hand, the superposition of the electrical potential caused by the planar Paul trap with the magnetic field of the permanent magnet arrangement makes the equilibrium positions of the ions dependent on their respective quantum state. As a consequence of this, an effective spin-spin coupling is achieved by the Coulomb interaction between the trapped ions. This enables entanglement of the quantum states of the ions.

Furthermore, several quantum registers or ion crystals, respectively, may be advantageous for further scaling. This can be achieved using a planar Paul trap which allows to scale beyond hundreds of ions and thus reach a total number of trapped ions clearly beyond quantum supremacy, thus enabling the solution of computational problems that are so far inaccessible to classical super computers.

In summary, using the described quantum computing arrangement for quantum information processing enables advanced addressing in frequency space and thus individual single qubit rotations with low cross-talk, and introduces an effective coupling between the ions, thus enabling multi-qubit gates. This can also be used in connection with RF frequencies, for which addressing by focusing radiation is not an option due to the long wavelength, but the usage of RF fields for qubit control allows for the application of established and economic miniaturization and integration techniques already common even in consumer electronics, and simplifies scaling an ion trap based quantum computer.

The permanent magnet arrangement comprises a plurality of permanently magnetized segments. The segments may all be formed identically within the limits of manufacturing tolerances.

The permanent magnet arrangement may comprise at least four or at least eight or at least 16 or at least 32 segments. Each segment comprises or consists of a permanent magnetic material. For example, the permanent magnetic material is a ferromagnetic material. The segments may each comprise or consist of the same material. Each segment is formed, for example, in one piece. Alternatively, each segment is formed from at least two sub-segments, wherein the at least two sub-segments have the same material and/or magnetization properties.

Each segment has a magnetization direction. A magnetization of each segment is defined by a vector field being representative of dipole moments of the respective permanent magnetic material. This is to say that the respective permanent magnetic material exhibits dipole moments. The vector field, in particular the dipole moments of the permanent magnetic material, define the respective magnetization direction. The dipole moments largely point in the magnetization direction.

According to at least one embodiment, the segments are arranged such that the magnetization directions of at least some segments differ from each other such that the permanent magnet arrangement establishes the magnetic field with the magnitude of the magnetic field changing along the predefined line.

For example, the magnetization directions of every pair of directly neighbouring segments are different from each other. The magnetization directions may differ from each other by an angle of at least 5° or at least 10° and/or at most 90° or at most 45°. By way of example, if there are m segments, wherein m is an even natural number of at least 4, the magnetization directions of the two directly neighbouring segments are rotated by $360° \cdot 3/m$ with respect to one another.

The vector field defined by the magnetization directions of the segments and the position of the segments in space may be symmetric with respect to the above-mentioned symmetry plane. Particularly, this vector field can have the same symmetry as the geometry of the permanent magnet arrangement.

Alternatively, the vector field may asymmetric with respect to the symmetry plane and/or may have a different symmetry than the geometry of the permanent magnet arrangement or may be even asymmetric.

According to at least one embodiment of the quantum computing arrangement, the permanent magnet arrangement comprises NdFeB. In particular, the permanent magnet arrangement comprises NdFeB N52. Exemplarily, each segment comprises or consists of NdFeB, in particular NdFeB N52.

The segments are arranged in a Halbach arrangement. A Halbach arrangement is a special arrangement of permanent magnets that augments the magnetic field on one side of the arrangement and cancels the field to near zero on the other side. Particularly, this is achieved by having a spatially rotating pattern of the magnetization directions of the segments.

With such a Halbach arrangement, particularly high magnetic fields and magnetic field gradients can be achieved. Since the effective spin-spin coupling as well as the differences in the resonances of neighbouring ions is dependent on the inhomogeneity and the magnitude of the magnetic field, a Halbach arrangement is particularly useful. Indeed, the Halbach arrangement allows for large gradients even when the distance between any surface (including the surfaces of trap electrodes and magnets) and trapped ions should be large which is desirable for high fidelity gates with trapped ions. This combined with, for example, segmented traps allows for flexible trapping configurations, to trap several registers, for splitting and merging of quantum registers, tuning of coupling constant between qubits and in general for scaling the power of ion trap based quantum computers.

According to at least one embodiment, the permanent magnet arrangement surrounds the planar Paul trap and/or the electrodes thereof. That is to say, the planar Paul trap is a separate device from the permanent magnet arrangement. Particularly, the segments of the permanent magnet arrangement are different from the electrodes of the planar Paul trap. For example, the permanent magnet arrangement has the shape of a ring or the shape of contour or periphery, respectively, of a polygon. Thus, the planar Paul trap may be surrounded by a ring-shaped or polygon-contour--shaped permanent magnet arrangement. The permanent magnet arrangement may then augment the magnetic field in the interior of the ring or contour and cancel the field to near zero outside the ring or contour other side.

According to at least one embodiment, at least some electrodes of the planar Paul trap are formed by segments of the permanent magnet arrangement.

According to at least one embodiment, at least some electrodes of the planar Paul trap, i.e. some or all electrodes of the planar Paul trap, are arranged in a common electrode plane. For example, all electrodes of the planar Paul trap with which the electrical trapping potential is produced are arranged in the electrode plane. The top side may coincide with or may be parallel to the electrode plane.

The electrodes arranged in the electrode plane particularly intersect with the electrode plane. Main extension planes of the electrodes run parallel or coincide with the electrode plane, for example.

Some electrodes of the planar Paul trap may also be arranged on different heights with respect to the top side. For example, stacks of electrodes are arranged on the top side with isolating layers separating each tow electrodes in direction perpendicular to the top side.

According to at least one embodiment, the lateral extensions of the planar Paul trap and/or of the substrate is at most 5 cm or at most 2 cm or at most 1 cm. The lateral extensions are, for example, measured along the electrode plane. A thickness of the planar Paul trap or the substrate, measured perpendicularly to the electrode plane, may be at most 1 cm or at most 0.5 cm or at most 0.2 cm.

According to at least one embodiment, at least a portion of the permanent magnet arrangement is arranged in the substrate, for example embedded in the substrate. For instance, one or more or all segments of the permanent magnet arrangement are arranged in the substrate. Independently of whether the permanent magnet arrangement surrounds the planar Paul trap or is arranged in the substrate or is arranged elsewhere, the permanent magnet arrangement may be ring-shaped or polygon-contour-shaped. Thus, the segments may be arranged in a ring or in a contour of a polygon.

According to at least one embodiment, the planar Paul trap is a linear planar Paul trap for trapping at least one ion crystal having ions lined up along a predefined straight line or axis, respectively. Thus, the predefined line is a predefined straight line or predefined axis, respectively. Alternatively, the planar Paul trap may be a circular planar Paul trap.

According to at least one embodiment, the permanent magnet arrangement establishes a substantially two-dimensional magnetic field which is mainly concentrated in a magnetic field plane. The center of the magnetic field may lie in the magnetic field plane. The above-mentioned symmetry plane of the permanent magnet arrangement is, for example, perpendicular to the magnetic field plane. For example, all the segments of the permanent magnet arrangement are arranged in the magnetic field plane.

When starting from the magnetic field plane and moving in directions perpendicular to the magnetic field plane, the magnetic field decays, e.g. the average magnitude of the magnetic field decays to almost zero. The decay length depends on the dimensions of the permanent magnet arrangement, e.g. on the inner and/or outer radius and/or the thickness of the segments measured perpendicular to the magnetic field plane. Particularly, the decay length is proportional to the inner and/or outer radius and the thickness of the segments.

For instance, the average magnitude of the magnetic field has a Full Width Half Maximum (FWHM) of at least 1 $\mu$m or at least 10 $\mu$m and/or at most 10 mm or at most 500 $\mu$m in direction perpendicular to the magnetic field plane. For example, in this case, the average magnitude of the magnetic field outside the magnetic field plane, e.g. at a distance of 1 mm from the magnetic field plane, is at least one order of magnitude smaller than the average magnitude of the magnetic field in the magnetic field plane. In other words, the magnetic field plane is a main extension plane of the magnitude of the magnetic field.

For example, with the segments of the permanent magnet arrangement arranged in the form of a ring with the main extension plane of the ring defining the xy-plane, the magnetic flux density $\vec{B}$ corresponding to the magnetic field is:

$$\vec{B} = 2B_R \left( \frac{1}{R_i} - \frac{1}{R_o} \right) \begin{pmatrix} 1 & 0 \\ 0 & -1 \end{pmatrix} \begin{pmatrix} x \\ y \end{pmatrix}.$$

$B_R$ is the remanence of the segments, $R_i$ the inner radius of the ring, $R_o$ the outer radius of the ring and x and y are the coordinates within the permanent magnet arrangement. In this case, the magnetic field plane is the xy-plane or the main extension plane of the ring, respectively.

The magnetic field plane may run parallel to the top side of the substrate and/or the electrode plane. With the segments being arranged or embedded, respectively, in the substrate, the magnetic field plane may run through the substrate. The electrodes and/or the predefined line may then be offset from the magnetic field plane. However, due to the small distance of the predefined line from the top side and, with this, due to the small distance of the predefined line to the magnetic field plane, e.g. of at most 100 $\mu$m, the magnitude of the magnetic field along the predefined line is still sufficient to perform quantum computing.

According to at least one embodiment, the quantum computing arrangement further comprises a yoke structure for increasing the magnetic field and/or the change of the magnitude of the magnetic field along the predefined line established by the permanent magnet arrangement. The yoke structure is particularly arranged such that it increases the magnetic field or magnetic field gradient in the region of the trapped ions, i.e. along the predefined line. For example, the yoke structure comprises or consists of a soft magnetic material. It may have a coercivity of at most 1000 A/m or at most 100 A/m. The soft magnetic material may be a ferromagnetic material configured to be magnetised by the magnetic field established by the permanent magnet arrangement. The soft magnetic material may have a relative magnetic permeability of at least 300 or at least 1000 or at least 10000. Exemplarily, the soft magnetic material has a relative magnetic permeability of about 12000. A saturation flux density of the soft magnetic material may be at least 0.5 T or at least 2 T. For example, the soft magnetic material comprises at least one of: iron, cobalt, vanadium, manganese, niobium, silicon, carbon.

The yoke structure may extend along or parallel to the predefined line. For example, the yoke structure comprises two portions spaced apart from each other in a direction parallel to the predefined line. Each of the two portions may be elongated and may, for example, extend along or parallel to the predefined line, i.e. the elongated portions may be orientated parallel to the predefined line.

The steepness of the magnetic gradient can be further enhanced by using the yoke structure to concentrate the magnetic flux. The yoke structure is, for example, placed in regions, where the magnetic field of the permanent magnet arrangement is already of small magnitude and concentrates it to the small cross section of the yoke structure without exceeding the saturation magnetization of the yoke structure, thus substantially boosting the magnitude of achievable gradients, allowing for lower cross-talk, stronger couplings and faster quantum gates.

According to at least one embodiment, the yoke structure is arranged or embedded, respectively, in the substrate. Particularly, the at least two elongated portions of the yoke structure may be arranged in the substrate. For example, the yoke structure is embedded in the substrate.

Alternatively, the yoke structure may be arranged on the top side of the substrate. Likewise, the permanent magnet arrangement, e.g. at least some segments thereof, may be arranged on the top side of the substrate.

According to at least one embodiment, the yoke structure is at least partially formed by electrodes of the planar Paul trap. For example, at least some electrodes of the planar Paul trap constitute a portion of the yoke structure. In other words, at least some electrodes of the Paul trap may comprise or consist of a soft magnetic material in order to increase the magnetic field or the magnetic field gradient established by the permanent magnet arrangement.

According to at least one embodiment, the yoke structure comprises or consist of an iron-cobalt alloy. The iron-cobalt alloy may comprise vanadium, e.g. with a concentration of at least 1.5 % and at most 3 %.

According to at least one embodiment, the change of the magnetic field along the predefined line in the center of the magnetic field is at least 0.5 T/m or at least 50 T/m or at least 100 T/m and/or at most 500 T/m.

According to at least one embodiment, the planar Paul trap is a segmented planar Paul trap. The planar Paul trap is, for example, configured to produce several electric potential wells. Each potential well is, for example, configured to host or trap, respectively, an ion crystal with each ion crystal having several ions lined up along a predefined line. An electrical potential wall separating two adjacent ion crystals may be arranged between the potential wells.

All features disclose herein for one ion crystal are also disclosed for all further ion crystals.

The individual predefined lines assigned to the different ions crystals may all be straight lines. For example, they all coincide with the same straight line. Alternatively, the individual predefined lines assigned to the individual ion crystal may be different from each other, e.g. may be offset with respect to each other and/or may lie on different heights with respect to the top side of the substrate. The individual lines may the still be parallel to each other.

The potential wells and/or the ion crystals are, for example, arranged behind each other in direction parallel to the predefined line or parallel to one of the individual predefined line.

According to at least one embodiment, the quantum computing arrangement is configured to enable interaction between the ion crystals by ion transport and/or photonic links. By way of example, a photon emitted by an ion of one ion crystal may interact with an ion of an adjacent ion crystal. Alternatively, by changing the potential wall between two adjacent potential wells, one or more ions can be transferred from one ion crystal to the adjacent ion crystal. For example, the potential wall can be made so shallow and/or so narrow, that an ion hops from one ion crystal to the adjacent ion crystal.

Planar segmented traps allow for a large number of registers, which may be controlled independently by RF but can also interact by ion transport or photonic links.

According to at least one embodiment, the segmented planar Paul trap is configured to merge two adjacent electrical potential wells into a larger electrical potential well. For example, the potential wall between two adjacent potential wells may be resolved in order to create one larger potential well from two smaller potential wells.

According to at least one embodiment, the segmented planar Paul trap is configured to divide one electrical potential well into two adjacent, smaller electrical potential wells. For example, a potential wall may be generated within a potential well so that two smaller potential wells are separated by the potential wall.

The terms "smaller" and "larger" used in conjunction with potential wells particularly means smaller or larger extents of the potential well in a direction parallel to the predefined line.

According to at least one embodiment, the planar Paul trap comprises an inner electrode structure, two outer electrode structures and two intermediate electrode structures. Each of these electrode structures may comprise or consist of a plurality of electrodes spaced apart from each other or may consist of one single, contiguous electrode.

According to at least one embodiment, the inner electrode structure is arranged between the intermediate electrode structures and the intermediate electrode structures are arranged between the outer electrode structures. For example, in a transverse direction parallel to the top side or electrode plane, respectively, and perpendicular to the predefined line, the inner electrode structures are arranged between the intermediate electrode structures and the intermediate electrode structures are arranged between the outer electrode structures.

According to at least one embodiment, the electrode structures each extend parallel to the predefined line. For example, each electrode structure is an elongated structure with a main extension direction of the electrode structure being parallel to the predefined line.

According to at least one embodiment, the outer electrode structures each comprise at least three electrodes, namely two end electrodes and at least one center electrode. The at least one center electrode is arranged between the two end electrodes in a direction parallel to the predefined line. The inner electrode structure and intermediate electrode structure may each consist of only one electrode elongated in a direction parallel to the predefined line.

According to at least one embodiment, the inner electrode structure comprises at least one electrode. The intermediate electrode structures each comprise at least one electrode. The electrode of the inner and intermediate electrode structures extend, for example, in the direction parallel to the predefined line. They may thereby extend over the at least three electrodes of the outer electrode structures in direction parallel to the predefined line.

According to at least one embodiment, the intermediate electrode structures are RF electrode structures. During operation, the RF electrode structures are provided with an alternating voltage. With the help of the RF electrode structures, an oscillating electrical potential is created for confining the ions in directions perpendicular to the predefined line, i.e. in radial directions.

According to at least one embodiment, the inner electrode structure is a DC electrode structure. For example, the inner electrode structure is on ground during operation of the planar Paul trap.

According to at least one embodiment, in each outer electrode structure, the at least one center electrode is controllable independently of the end electrodes. That is, the at least one center electrode can be set or is set to a different electrical potential than the end electrodes. Due to this, an electrical potential for trapping the ions in a direction parallel to the predefined line can be produced. Thus, in total, an electrical potential well for hosting an ion crystal with several ions aligned along the predefined line is produced.

The end electrodes constitute, for example, end-cap electrodes of the planar Paul trap. The at least one center electrode constitutes, e.g., a DC-electrode of the planar Paul trap. For example, when the center electrode is on a smaller electrical potential than the end electrodes, a potential well is formed for hosting an ion crystal.

According to at least one embodiment, each outer electrode structure comprises at least five electrodes.

According to at least one embodiment, in each outer electrode structure, at least a first center electrode and a second center electrode are controllable independently of a third center electrode. That is, the third center electrode can be set to a different electrical potential than the first and the second center electrode. For example, the electrical potential of the third center electrode can be varied.

The third center electrode is arranged between the first and the second center electrode in a direction parallel to the predefined line, for example it is adjacent to the first and second center electrode. The center electrodes are arranged between the end electrodes in a direction parallel to the predefined line. In this way, at least two electrical potential wells can be produced to be arranged behind each other in a direction parallel to the predefined line and each potential well is configured to host an ion crystal, i.e. to confine a plurality of ions lined up along the predefined line.

For example, the first and the second center electrode are each assigned an electrical potential well so that the assigned potential well, e.g. a minimum thereof, is aligned with the respective center electrode in a direction parallel to the predefined line. The third center electrode may be assigned a potential wall between the potential wells. The potential wall may be aligned with the third center electrode in a direction parallel to the predefined line. For example, the third center electrode generates the potential wall.

During operation, the third center electrode may lie on the same electrical potential as the end electrodes or on the same electrical potential as the first and second center electrode of the respective outer electrode structure. For example, the potential of the third center electrode may be variable between the potential of the end electrodes and the potential of the first and second center electrode. The potential of the third center electrode may be controllable independently of the electrical potential of the end electrodes in order to resolve or establish the potential wall between the potential wells. The first and the second center electrode may be on ground during operation, for example.

The electrodes of the two outer electrode structures corresponding to each other may be electrically connected so that they lie on the same electrical potential.

The planar Paul trap may be also formed with a plurality of electrodes arranged on the top side of the substrate in a pixel arrangement. For example, each electrode is rectangular or squared and the electrodes are arranged in a rectangular pattern on the top side. The electrodes may all be individually and independently controllable with a RF- and/or DC voltage.

According to at least one embodiment, the quantum computing arrangement comprises at least two permanent magnet arrangements. Each of the two permanent magnet arrangements may comprise several segments each having a magnetization direction. All features disclosed in connection with one permanent magnet arrangement are also disclosed for the other permanent magnet arrangement. Particularly, each permanent magnet arrangement may be a Halbach arrangement and/or may be integrated in the substrate.

According to at least one embodiment, the permanent magnet arrangements are configured such that each one produces a magnetic field. For example, for each permanent magnet arrangement, the magnitude of the respective magnetic field changes along the predefined line. By using two such permanent magnet arrangements, zones of high control and/or steep field variation can be combined with zones of low and/or almost constant magnetic field for uncritical ion transport. For example, the permanent magnet arrangements are arranged one behind the other in a direction parallel to the predefined line.

According to at least one embodiment, each potential well or ion crystal, respectively, is assigned an individual permanent magnet arrangement.

According to at least one embodiment, each permanent magnet arrangement is configured such that a magnitude of its magnetic field changes along the predefined line of the assigned ion crystal. For example, the center of each permanent magnet arrangement or the center of the magnetic field established by that permanent magnet arrangement is aligned with the assigned potential well (e.g. the minimum thereof) in a direction parallel to the respective predefined line and/or in transverse direction.

For example, the center of each permanent magnet arrangement or the center of the magnetic field established by that permanent magnet arrangement is aligned with center electrodes of the outer electrode structures in a direction parallel to the predefined line. The center of a first permanent magnet arrangement may be aligned with the first center electrodes and the center of a second permanent magnet arrangement may be aligned with the second center electrodes. In plan view of the top side, the centers of the permanent magnet arrangements may overlap with the inner electrode structure.

According to at least one embodiment, the quantum computing arrangement comprises a vacuum chamber. During operation, the ions are trapped in the vacuum chamber. The planar Paul trap or the electrodes thereof may also be arranged in the vacuum chamber. The vacuum chamber may be an ultra-high vacuum chamber, an extreme-high vacuum chamber and/or a cryostat.

According to at least one embodiment, the permanent magnet arrangement is arranged outside of the vacuum chamber. This can be advantageous since the creation of ultra-high vacuum, UHV for short, can involve steps such as baking, which can be incompatible with many magnetic materials, especially those with low Curie temperature. The permanent magnet arrangement still creates a sufficiently high magnetic field or field gradient in the area of the ions even when located outside of the vacuum chamber. Alternatively, the permanent magnet arrangement can also be located inside the vacuum chamber. The optional yoke structure may be arranged inside or outside the vacuum chamber and may increase the magnetic field (gradient).

Next, the quantum computer is specified. The quantum computer comprises a quantum computing arrangement as described herein. Therefore, all features disclosed for the quantum computing arrangement are also disclosed for the quantum computer and vice versa.

The quantum computer is configured to perform quantum computing processes by using the quantum computing arrangement. The trapped ions of the quantum computing arrangement can be controlled and manipulated particularly well with the permanent magnet arrangement described herein above, in order to perform predetermined quantum calculations.

According to at least one embodiment, the quantum computer further comprises a cooling and/or read-out system. The cooling and/or the read-out system is, for example, laser-based. The cooling system is configured for cooling the ions in order to prepare them in low motional states and trap them in their respective ground states. The read-out system is configured for determining the state of each ion. For example, the ions are cooled and/or read-out by impinging a laser beam on them or by scattering photons of the laser beam, respectively.

Hereinafter, the quantum computer arrangement and the quantum computer will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. In so far as elements or components correspond to one another in terms of their function in different figures, the description thereof is not repeated for each of the following figures. For the sake of clarity, elements might not appear with corresponding reference symbols in all figures.

Figure 1 shows a first exemplary embodiment of a quantum computing arrangement,

Figures 2 and 3 show an exemplary embodiment of a planar Paul trap in different views,

Figures 4 and 5 show a second exemplary embodiment of the quantum computing arrangement in different views,

Figure 6 shows a further exemplary embodiment of a planar Paul trap,

Figures 7 and 8 show further exemplary embodiments of the quantum computing arrangement,

Figure 9 shows an exemplary embodiment of a quantum computer.

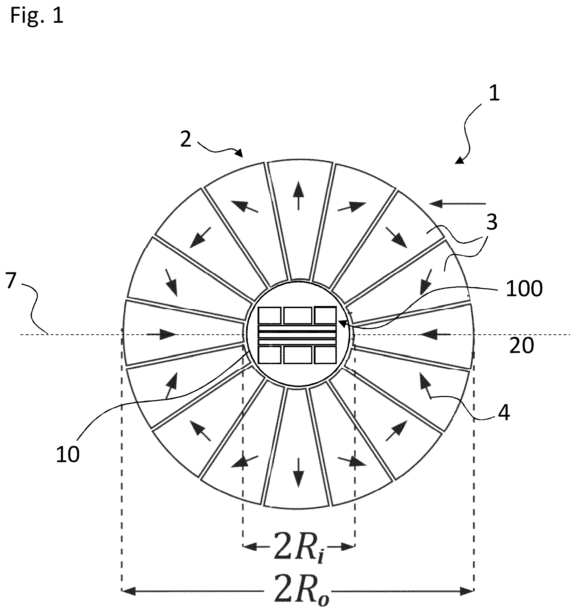

Figure 1 shows a first exemplary embodiment of the quantum computing arrangement 1. The quantum computing arrangement 1 comprises a permanent magnet arrangement 2. The permanent magnet arrangement 2 comprises 16 permanently magnetized segments 3. The segments 3 surround a planar Paul trap 100. The planar Paul trap 100 is configured to trap an ion crystal 6a having a plurality of ions 6 lined up along a predefined line 7 or trap line 7, respectively. In this exemplary embodiment, the planar Paul trap 100 is a linear planar Paul trap for trapping the ions 6 along a straight line 7. The straight line 7 defines an x-axis.

The permanent magnet arrangement 2 has the shape of a ring with the planar Paul trap 100 being arranged in the center of the ring. The thickness of each segment 3 is, e.g., 100 $\mu$m. The ring spans a xy-plane. Each segment 3 has the shape of a ring segment. The minimum distance between two opposite segments 3, i.e. the inner ring diameter 2Ri, is approximately 0.2 mm. Furthermore, each segment 3 has an extent along the corresponding minimal distance being approximately 0.2 mm. The outer diameter 2Ro of the permanent magnet arrangement 2 is, accordingly, approximately 0.6 mm. Edges of directly neighbouring segments 3 facing one another, have a distance to one another of approximately 10 $\mu$m, for example.

Furthermore, each segment 3 has a magnetization direction 4 being depicted as arrows within the segments 3 in Figure 1. The segments are each formed of NdFeB N52, for example. The magnetization directions 4 of segments 3 being arranged at opposite regions with respect to a centre of the permanent magnet arrangement 2 are directed in opposite directions. The predefined line 7 runs through the center of the permanent magnet arrangement 2 and intersects with two opposite segments 3, wherein the magnetization directions 4 of these two segments 3 are parallel to the predefined line 7.

Each magnetization direction 4 encloses an angle with the predefined line 7. All of these angles are formed different to one another. For example, the angles of each two directly neighbouring segments 3 differ by 67.5° from one another. The magnetization directions 4 are all in the xy-plane.

The permanent magnet arrangement of figure 1 is a Halbach arrangement establishing a magnetic quadrupole field with a magnitude of the magnetic field changing along the predefined line 7. In other words, the magnetic field has a magnetic field gradient along the predefined line 7. For example, each of the trapped ions arranged along the predefined line therefore sees a different magnetic field.

With that permanent magnet arrangement of figure 1, the following idealized magnetic flux density $\vec{B}$ is produced:

$$\vec{B} = 2B_R \left( \frac{1}{R_i} - \frac{1}{R_o} \right) \begin{pmatrix} 1 & 0 \\ 0 & -1 \end{pmatrix} \begin{pmatrix} x \\ y \end{pmatrix}.$$

The remanence $B_R$ of each of the segments 3 is, for example, 1 T. As can be extracted from this idealized magnetic flux density, the magnetic field is mainly a two-dimensional magnetic field which is concentrated in the xy-plane which constitutes a magnetic field plane.

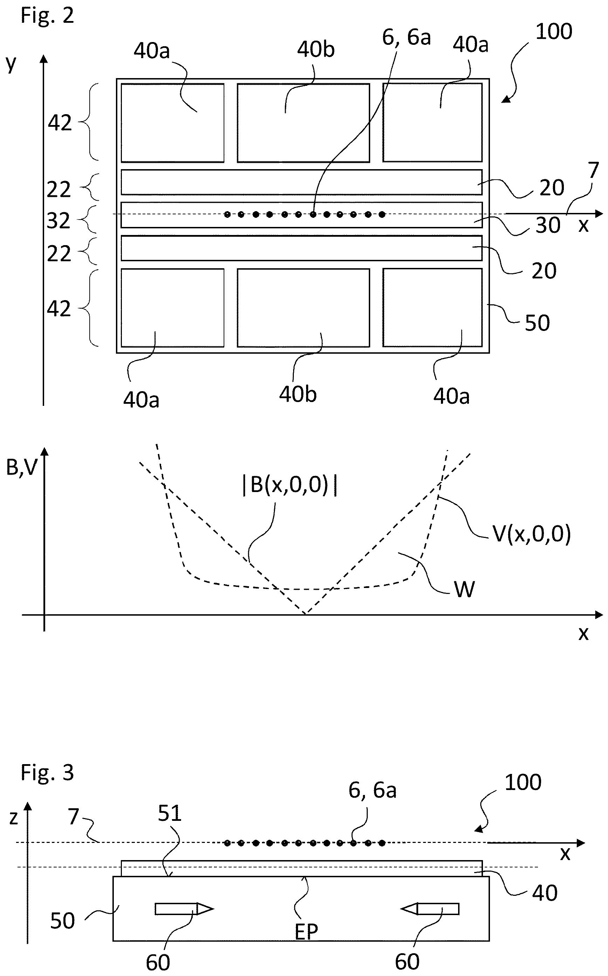

Figures 2 and 3 show the planar Paul trap 100 of figure 1 in two different views. The planar Paul trap 100 comprises a plurality of electrodes 20, 30, 40a, 40b which are configured to produce an electrical potential in order to trap the ions 6 along the predefined 7. The electrodes 20, 30, 40a, 40b are all arranged on a top side 51 of a substrate 50 and all lie in a common electrode plane EP. Figure 2 is a plan view of the top side 51 wherein figure 3 is a cross-sectional view perpendicular to the top side 51.

The electrodes 20, 30, 40a, 40b are, for example, formed of Au. The substrate 50 may be a sapphire substrate.

The electrodes 20, 30, 40a, 40b are part of an inner electrode structure 32, two intermediate electrode structures 22 and two outer electrode structures 42. The inner electrode structure 32 is formed by one contiguous, elongated electrode 30 which extends parallel to the predefined line 7. The intermediate electrode structures 22 are each formed by one contiguous, elongated electrode 20 which also extends parallel to the predefined line 7. The inner electrode structure 32 is thereby arranged between the intermediate electrode structures 22 in a transverse direction perpendicular to the direction of the predefined line 7. The intermediate electrodes 20 are RF-electrodes for being supplied with an alternating voltage during operation. The inner electrode 30 is a DC-electrode, which, during operation, lies on ground, for example. Alternatively, the inner electrode 30 may be a RF-electrode. With the help of the inner electrode 30 and the intermediate electrodes 20, an oscillating electrical potential is created, which particularly confines the ions in radial directions, i.e. in directions perpendicular to the predefined line 7.

The outer electrode structures 42 each comprise three electrodes 40a, 40b. The inner electrode structure 32 and the intermediate electrode structures 22 are arranged between the outer electrode structures 42 in the transverse direction. The electrodes 40a, 40b of the outer electrode structures 42 are arranged in a line one behind the other, wherein the line is parallel to the predefined line 7. End electrodes 40a of each outer electrode structure 42 constitute end-cap electrodes, which, during operation, lie on the same electrical potential, for example. The center electrodes 40b, arranged between the end electrodes 40a are, for example, on ground during operation.

The electrical potential V(x,0,0) along the x-axis (predefined line 7) created by the electrodes 20, 30, 40a, 40b is shown in the graph of figure 2. In total, a potential well W is formed which traps the ions 6. The ions 6 in the potential well W form a linear ion crystal 6a.

In the diagram of figure 2, the magnitude of the magnetic field, namely the magnitude of the magnetic flux density |B(x,0,0)|, on the x-axis created by the permanent magnet arrangement 2 of figure 1 is also illustrated.

As can be best seen in figure 3, a yoke structure 60 is embedded in the substrate 50. The yoke structure 60 comprises two portions which are spaced from each other in a direction parallel to the predefined line 7. Each portion of the yoke structure 60 is an elongated element and consists of a soft magnetic material. The yoke structure 60 increase the magnetic field and the gradient thereof along the predefined line 7.

The ions 6 shown in figures 1 to 3, are, e.g., $^{171}$Yb$^+$ ions. Distances d of directly neighbouring trapped ions are approximately 3 $\mu$m, for example. The degeneracy of the excited quantum state is resolved by the magnetic field generated by the permanent magnet arrangement 2. The energy for the $\pi$-transition from the ground quantum state to the excited m=0 quantum state depends weakly on the magnetic field seen by the ion. Likewise, the energies of the $\sigma_\pm$-transitions from the ground quantum state to the excited m=$\pm$1 quantum state depend on the magnetic field seen by the ion.

Since the magnitude of the magnetic field depends on the position of the ion 6 along the predefined line 7, the energies of the transitions depend on the position along the predefined line 7. For example, for each two neighbouring ions 6, a frequency difference for the $\sigma_\pm$-transition is at least 1 MHz and at most 100 MHz. Moreover, for each two neighbouring ions 6, a frequency difference of the $\pi$-transitions is at least 0.001 MHz and at most 10 MHz.

Moreover, due to the form of the potential well W along the predefined line 7 and the magnetic field provided by the permanent magnet arrangement 2, the equilibrium positions of the ions 6 depend on their respective quantum state. Thus, an effective spin-spin coupling between the ions 6 due to Coulomb interaction is realized. This allows the quantum states of the ions 6 to be entangled.

In particular, a coupling strength between two directly neighbouring trapped ions 6 depends on the square of the magnetic field gradient. Furthermore, a relaxation time, in particular a spin relaxation time T2, is inversely proportional to decoherence rate. Thus, in order to provide multi-qubit gates, the magnetic field gradient has to be comparatively high to provide a large number of gates within a given time. This can be achieved with the permanent magnet arrangement described herein.

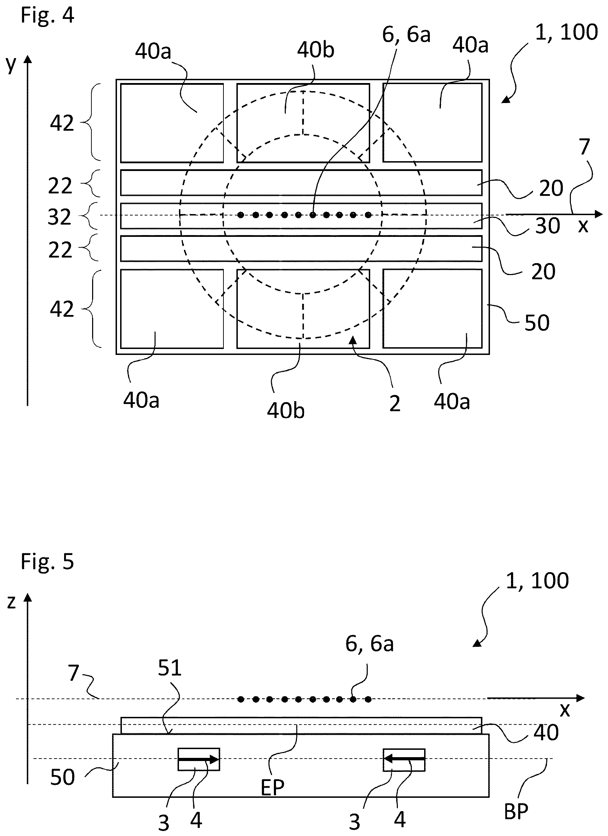

Figures 4 and 5 show a further exemplary embodiment of the quantum computing arrangement **1**. In contrast to the quantum computing arrangement of figure 1, the permanent magnet arrangement 2 comprising a plurality of permanent magnetized segments 3 is arranged or embedded, respectively, in the substrate 50. The permanent magnet arrangement 2 is indicated by dashed lines in figure 4.

The magnetic field plane BP in which the magnetic field established by the permanent magnet arrangement 2 mainly lies in the substrate 50. The predefined line 7 is, accordingly, offset from the magnetic field plane BP. However, since the distance of the predefined line 7 or the ions 6, respectively, to the magnetic field plane BP is small, for example less than 150 $\mu$m, the ions 6 still feel a sufficient magnetic field to allow for proper quantum computing operations.

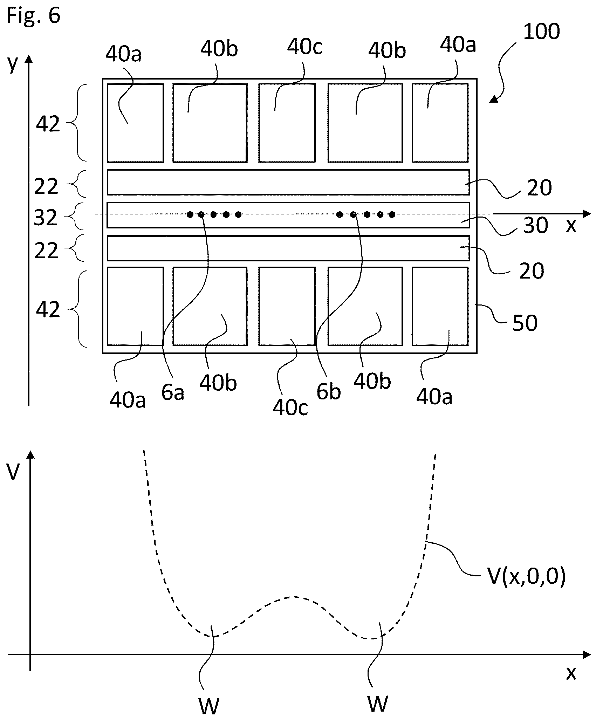

Figure 6 shows a further exemplary embodiment of a planar Paul trap 100 which could be used, for example, with an integrated permanent magnet arrangement as shown in figures 4 and 5, or with a surrounding permanent magnet arrangement as shown in figure 1. In contrast to the planar Paul traps 100 of figures 2 to 5, the planar Paul trap 100 of figure 6 comprises outer electrode structures 42, each with five electrodes 40a, 40b, 40c arranged one behind the other in a direction parallel to the predefined line 7. Each outer electrode structure 42 comprises two end electrodes 40a and three center electrodes 40b, 40c.

A third center electrode 40c is thereby arranged between a first and a second center electrode 40b. The third center electrode 40c is controllable independently of the other center electrodes 40b. For example, during operation, the third center electrode 40c can be set to the same electrical potential as the end electrodes 40a, wherein the first and the second center electrodes 40b may be on ground.

The result of this is the electrical potential V(x,0,0) in x-direction, as shown in figure 6. Two adjacent potential wells W arranged behind each other in a direction parallel to the predefined line 7 are produced. Each potential well W confines and hosts an ion crystal 6a, 6b comprising a plurality of ions 6 lined up along the predefined line 7. The two potential wells W are separated from each other by a potential wall which is mainly attributed to the third center electrode 40c.

The ion crystals 6a, 6b of figure 6 can interact with each other, e.g. by photonic links. Alternatively, the ion crystals 6a, 6b can interact with each other by ion transport. For example, by changing the potentials of the electrodes 40a, 40b, 40c of the outer electrode structures 42, the form of the potential V(x,0,0) in the x-direction can be changed and an ion 6 can be transported from one ion crystal 6a to the adjacent ion crystal 6b. As an example, when setting the third center electrodes 40c on the same electrical potential as the first and the second center electrodes 40b, the two potential wells W shown in figure 6 can be merged to one larger potential well and the two separate ion crystals 6a, 6b then merge to one large ion crystal 6a.

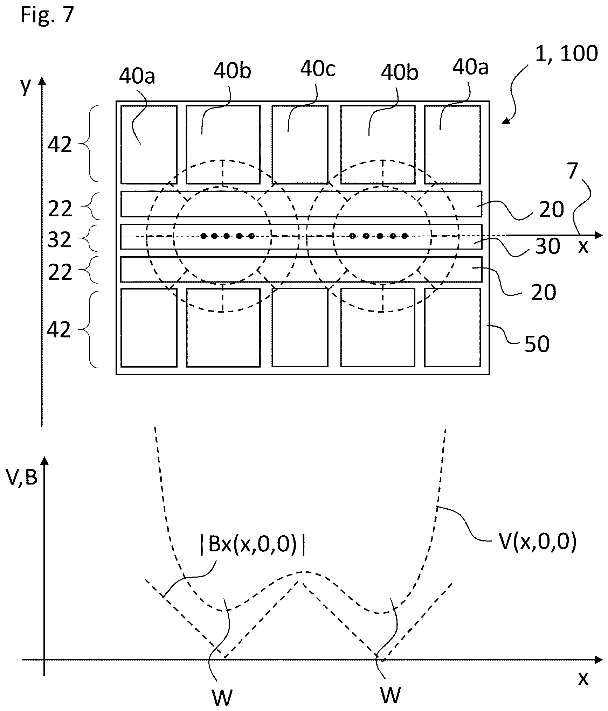

Figure 7 shows an exemplary embodiment of the quantum computing arrangement 1, where two permanent magnet arrangements 2, each in the form of a Halbach arrangement, are embedded in the substrate 50 of the planar Paul trap 100. The permanent magnet arrangements 2 are thereby arranged behind each other in a direction parallel to the predefined line 7 with the centers of the permanent magnet arrangements 2 overlapping with the predefined line 7 in plan view of the top side 51. The two permanent magnet arrangements 2 are arranged such that each of them is uniquely assigned to a potential well W and a respective ion crystal 6a, 6b.

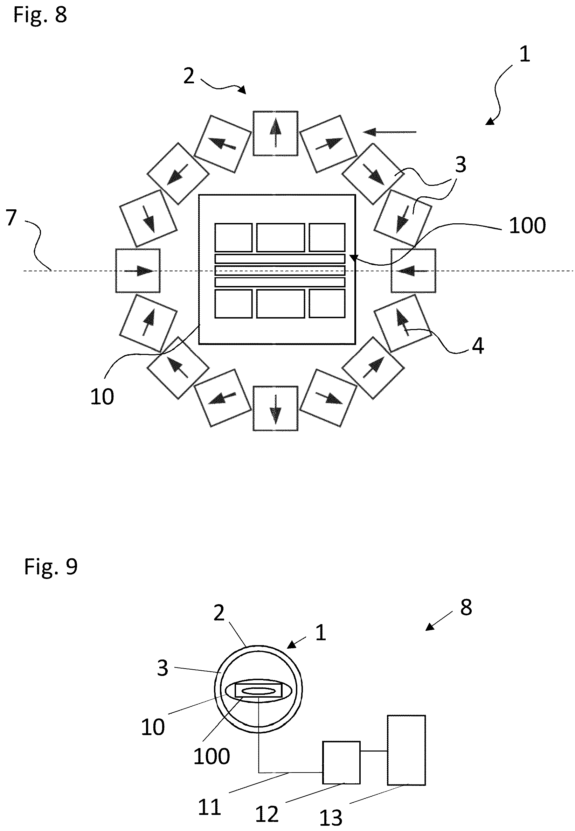

In the exemplary embodiment of figure 8, the permanent magnet arrangement 2 surrounds a planar Paul trap 100 in the form of a contour of a polygon. Each segments 3 has the form of a square. Neighbouring segments 3 are rotated with respect to each other.

As can be further seen in figure 8, the Paul trap 100 is arranged in a chamber 10 and the chamber 10 is surrounded by the permanent magnet arrangement 2. The chamber 10 is, e.g., an ultra-high vacuum chamber.

An exemplary embodiment of a quantum computer 8 is shown in figure 9. The quantum computer 8 comprises a quantum computing arrangement 1 according to one of the exemplary embodiments described herein. The planar Paul trap 100 is connected to external components of the quantum computer 8 through the chamber 10 by a plurality of connections 11. For instance, the connections 11 connect the planar Paul trap 100 with external control electronics 12 and a classical computer 13.

The quantum computing arrangement 1 is configured to trap, manipulate and measure trapped ions. For this, the quantum computing arrangement 1 may comprise, besides the permanent magnet arrangement 2 and any components of the planar Paul trap 100, light guides and/or internal electronics comprising electronic devices. The electronic devices can comprise circuitry, integrated electronics, power supply and/or detectors, such as photon detectors and/or charge detectors, controllers etc. Exemplarily, the internal electronics are provided for pre-processing. For example, these components allow a measurement of a respective state of the ion and allow gate operations on the ion. Thus, the quantum computing arrangement 1 is configured to trap the ions as well as to carry out operations and measurements on the trapped ions.

The Paul trap 100 is mounted in a chamber 10, wherein the chamber 10 can be an ultra-high vacuum chamber, an extreme-high vacuum chamber and/or a cryostat. It is possible that the permanent magnet arrangement 2 is arranged outside the chamber 10. In this case the permanent magnet arrangement 2 surrounds the chamber 10. Alternatively, it is possible that the permanent magnet arrangement 2 is arranged inside the chamber 10 (not shown here).

The quantum computing arrangement 1, particularly the Paul trap 100, is connected to the external electronics 12 via the connections 11. The external electronics 12 can be located at least partially inside and partially outside the chamber 10. Further, the external electronics 12 is connected to the classical computer 13.

The external electronics 12 comprises, for instance, analog to digital converters as well as signal generators such as radio frequency generators, microwave signal generators, low-frequency signal generators and/or direct current signal generators. Furthermore, the external electronics 12 can comprise a transistor-transistor logic, TTL.

Additionally, the external electronic 12 can further comprise at least one laser-based system configured to cool the trapped ions. Further, the laser-based system can be configured to excite a particular state of the trapped ions and/or to read-out a particular state of the ions.

The classical computer 13 is configured, for example, to provide and receive digital signals. The digital signals correspond to control signals used for operations on the qubits/ions as well as to measurement signals corresponding to a state of the qubits.

The external electronics 12 is, inter alia, configured to convert the digital signals to analog signals and vice versa. Therefore, the external electronics 12 is configured to provide the converted analog signals for manipulating the ions (qubits) to the quantum computing arrangement 1. Further, the external electronics 12 is configured to provide measured analog signals from the quantum computing arrangement 1 to the classical computer 13 or to process such signals to directly initiate some response signal generated by the control electronics 12.

The classical computer 13 is exemplarily configured to be provided with a specific algorithm, i.e. a predetermined quantum calculation solving a specific problem. The classical computer 13 is then configured to convert a compiled code corresponding to the algorithm to commands for the quantum computing arrangement 1. The commands are subsequently forwarded via the external control electronics 12 to the quantum computing arrangement 1. Furthermore, the classical computer 13 is configured to receive a measured outcome of the specific algorithm.

For example, all elements of the quantum computer 8, in particular all electronic elements of the quantum computer 8, are synchronized by an atomic clock reference, for example. The invention is not limited to the exemplary embodiments by their description.

Reference sign list:

| 1 | quantum computing arrangement |
| 2 | permanent magnet arrangement |
| 3 | segment |
| 4 | magnetization direction |
| 6 | ion |
| 6a, 6b | ion crystal |
| 7 | predefined line |
| 8 | quantum computer |
| 10 | chamber |
| 11 | connection |
| 12 | control electronics |
| 13 | classical computer |
| | |
| 20 | electrode |
| 22 | inner electrode structure |
| 30 | electrode |
| 32 | intermediate electrode structure |
| 40a,b,c | electrode |
| 42 | outer electrode structure |
| 50 | substrate |
| 51 | top side |
| 60 | yoke structure |
| 100 | Paul trap |
| | |
| $R_i$ | inner radius |
| $R_o$ | outer radius |
| BP | magnetic field plane |
| EP | electrode plane |
| W | potential well |
| V(x,y,z) | electrical potential |
| B(x,y,z) | magnetic flux density |

**Claims**

1. Quantum computing arrangement (1), comprising

   - a permanent magnet arrangement (2),
   - a substrate (50), wherein
   - the quantum computing arrangement (1) is configured to realize a planar Paul trap (100) for trapping at least one ion crystal (6a, 6b) having several ions (6) lined up along a predefined line (7), wherein

   - components of the quantum computing arrangement (1) which constitute electrodes (20, 30, 40a, 40b) of the planar Paul trap (100) for producing an electrical trapping potential are arranged on a top side (51) of the substrate (50),
   - the predefined line (7) is located above the top side(51),
   - the permanent magnet arrangement (2) establishes a magnetic field with a magnitude of the magnetic field changing along the predefined line (7),
   - the permanent magnet arrangement (2) comprises a plurality of permanently magnetized segments (3),
   - each segment (3) has a magnetization direction (4), and
   - the segments (3) are arranged in a Halbach arrangement.

2. Quantum computing arrangement (1) according to claim 1,

   - wherein the permanent magnet arrangement (2) surrounds the planar Paul trap (100) in the form of a ring or in the form of a contour of polygon.

3. Quantum computing arrangement (1) according to claim 1, wherein

   - all electrodes (20, 30, 40a, 40b) of the planar Paul trap (100) are arranged in a common electrode plane (EP).

4. Quantum computing arrangement (1) according to any one of the preceding claims, wherein

   - at least a portion of the permanent magnet arrangement (2) is arranged in the substrate (50).

5. Quantum computing arrangement (1) according to any one of the preceding claims, further comprising

   - a yoke structure (60) for increasing the magnetic field and/or the change of the magnitude of the magnetic field along the predefined line (7) established by the permanent magnet arrangement (2).

6. Quantum computing arrangement (1) according to any one of the preceding claims, wherein

   - the yoke structure (60) is arranged in the substrate (50).

7. Quantum computing arrangement (1) according to claim 5 or 6, wherein

- the yoke structure (60) comprises a soft magnetic material.

8. Quantum computing arrangement (1) according to any one of the preceding claims, wherein

- the planar Paul trap (100) is a segmented planar Paul trap (100) configured to produce several electrical potential wells (W) and each potential well (W) being configured to host an ion crystal (6a, 6b) having several ions (6) lined up along a predefined line (7).

9. Quantum computing arrangement (1) according to claim 8, wherein

- the quantum computing arrangement (1) is configured to enable an interaction between the ion crystals (6a, 6b) by ion transport and/or photonic links.

10. Quantum computing arrangement (1) according to claim 8 or 9, wherein the segmented planar Paul trap (100) is configured

- to merge two adjacent electrical potential wells (W) into a larger electrical potential well (W) and/or
- to divide one electrical potential well (W) into two adjacent smaller electrical potential wells (W).

11. Quantum computing arrangement (1) according to any one of the preceding claims, wherein

- the planar Paul trap (100) comprises an inner electrode structure (32), two outer electrode structures (42) and two intermediate electrode structures (22),
- the inner electrode structure (32) is arranged between the intermediate electrode structures (22) and the intermediate electrode structures (22) are arranged between the outer electrode structures (42),
- the electrode structures (22, 32, 42) extend parallel to the predefined line (7),
- the outer electrode structures (42) each comprise at least three electrodes (40a, 40b), namely two end electrodes (40a) and at least one center electrode (40b) arranged between the end electrodes (40a) in a direction parallel to the predefined line (7),
- the inner electrode structure (32) comprises at least one electrode (30) and the intermediate electrode structures (22) each comprise at least one electrode (20),

- the intermediate electrode structures (22) are RF electrode structures for being supplied with alternating voltage,
- in each outer electrode structure (42) the at least one center electrode (40b) is controllable independently of the end electrodes (40a) in order to produce at least one electrical potential well (W) for hosting an ion crystal (6a) with several ions (6) lined up along the predefined line (7).

12. Quantum computing arrangement (1) according to claim 11 in combination with claim 9 or 10, wherein

- each outer electrode structure (42) comprises at least five electrodes (40a, 40b, 40c),
- in each outer electrode structure (42), at least a first center electrode (40b) and a second center electrode (40b) are controllable independently of a third center electrode (40c) arranged between the first and second center electrodes (40b) in order to produce at least two electrical potential wells (W) arranged behind each other in a direction parallel to the predefined line (7) and each potential well (W) being configured to host an ion crystal (6a, 6b).

13. Quantum computing arrangement (1) according to any one of the preceding claims, comprising

- at least two permanent magnet arrangements (2), wherein
- the permanent magnet arrangements (2) are configured such that each one produces a magnetic field.

14. Quantum computing arrangement (1) according to claim 13 in its dependency of claim 8, wherein

- each ion crystal (6a, 6b) is assigned an individual permanent magnet arrangement (2),
- each permanent magnet arrangement (2) is configured such that a magnitude of its magnetic field changes along the predefined line (7) of the assigned ion crystal (6a, 6b).

15. Quantum computer (8), comprising a quantum computing arrangement (1) according to any one of the claims 1 to 14, configured for performing quantum computations, wherein the quantum computer (8) particular further comprises a laser based cooling and/or read-out system.

**Patentansprüche**

1. Quantencomputeranordnung (1), umfassend

- eine Permanentmagnetanordnung (2),
- ein Substrat (50), wobei
- die Quantencomputeranordnung (1) so konfiguriert ist, dass sie eine planare Paul-Falle (100) zum Einfangen mindestens eines Ionenkristalls (6a, 6b) mit mehreren entlang einer vordefinierten Linie (7) aufgereihten Ionen (6) realisiert, wobei
- Komponenten der Quantencomputeranordnung (1), die Elektroden (20, 30, 40a, 40b) der planaren Paul-Falle (100) zur Erzeugung eines elektrischen Einfangpotentials bilden, auf einer Oberseite (51) des Substrats (50) angeordnet sind,
- die vordefinierte Linie(7) sich oberhalb der Oberseite (51) befindet,
- die Permanentmagnetanordnung (2) ein Magnetfeld aufbaut, wobei sich die Größe des Magnetfeldes entlang der vordefinierten Linie (7) ändert,
- die Permanentmagnetanordnung (2) eine Vielzahl von permanent magnetisierten Segmenten (3) umfasst,
- jedes Segment (3) eine Magnetisierungsrichtung (4) hat, und
- die Segmente (3) in einer Halbach-Anordnung angeordnet sind.

2. Quantencomputeranordnung (1) nach Anspruch 1,

- wobei die Permanentmagnetanordnung (2) die planare Paul-Falle (100) ringförmig oder in Form einer Polygonkontur umgibt.

3. Quantencomputeranordnung (1) nach Anspruch 1, wobei

- alle Elektroden (20, 30, 40a, 40b) der planaren Paul-Falle (100) in einer gemeinsamen Elektrodenebene (EP) angeordnet sind.

4. Quantencomputeranordnung (1) nach einem der vorhergehenden Ansprüche, wobei

- zumindest ein Teil der Permanentmagnetanordnung (2) im Substrat (50) angeordnet ist.

5. Quantencomputeranordnung (1) nach einem der vorhergehenden Ansprüche, ferner umfassend

- eine Jochstruktur (60) zur Erhöhung des von der Permanentmagnetanordnung (2) aufgebauten Magnetfeldes und/oder der Änderung der Größe des von der Permanentmagnetanordnung (2) aufgebauten Magnetfeldes entlang der vordefinierten Linie (7).

6. Quantencomputeranordnung (1) nach einem der vorhergehenden Ansprüche, wobei

- die Jochstruktur (60) in dem Substrat (50) angeordnet ist.

7. Quantencomputeranordnung (1) nach Anspruch 5 oder 6, wobei

- die Jochstruktur (60) ein weichmagnetisches Material aufweist.

8. Quantencomputeranordnung (1) nach einem der vorhergehenden Ansprüche, wobei

- die planare Paul-Falle (100) eine segmentierte planare Paul-Falle (100) ist, die dazu eingerichtet ist, mehrere elektrische Potentialtöpfe (W) zu erzeugen, und jeder Potentialtopf (W) dazu eingerichtet ist, einen Ionenkristall (6a, 6b) aufzunehmen, der mehrere entlang einer vordefinierten Linie (7) aufgereihte Ionen (6) aufweist.

9. Quantencomputeranordnung (1) nach Anspruch 8, wobei

- die Quantencomputeranordnung (1) so konfiguriert ist, dass sie eine Wechselwirkung zwischen den Ionenkristallen (6a, 6b) durch Ionentransport und/oder photonische Verbindungen ermöglicht.

10. Quantencomputeranordnung (1) nach Anspruch 8 oder 9, wobei die segmentierte planare Paul-Falle (100) dazu eingerichtet ist

- zwei benachbarte elektrische Potentialtöpfe (W) zu einem größeren elektrischen Potentialtopf (W) zu vereinen und/oder
- einen elektrischen Potentialtop (W) in zwei benachbarte kleinere elektrische Potentialtöpfe (W) zu unterteilen.

11. Quantencomputeranordnung (1) nach einem der vorhergehenden Ansprüche, wobei

- die planare Paul-Falle (100) eine innere Elektrodenstruktur (32), zwei äußere Elektrodenstrukturen (42) und zwei Zwischenelektrodenstrukturen (22) umfasst,
- die innere Elektrodenstruktur (32) zwischen den Zwischenelektrodenstrukturen (22) angeordnet ist und die Zwischenelektrodenstrukturen (22) zwischen den äußeren Elektrodenstrukturen (42) angeordnet sind,
- die Elektrodenstrukturen (22, 32, 42) sich parallel zu der vordefinierten Linie (7) erstrecken,
- die äußeren Elektrodenstrukturen (42) jeweils mindestens drei Elektroden (40a, 40b) umfassen, nämlich zwei Endelektroden (40a) und mindestens eine Mittelelektrode (40b), die in einer Richtung parallel zu der vordefinierten Linie (7) zwischen den Endelektroden (40a) angeordnet ist,
- die innere Elektrodenstruktur (32) mindestens eine Elektrode (30) und die Zwischenelektrodenstrukturen (22) jeweils mindestens eine Elektrode (20) umfassen,
- die Zwischenelektrodenstrukturen (22) HF-Elektrodenstrukturen zur Versorgung mit Wechselspannung sind,
- in jeder äußeren Elektrodenstruktur (42) die mindestens eine Mittelelektrode (40b) unabhängig von den Endelektroden (40a) steuerbar ist, um mindestens einen elektrischen Potentialtopf (W) zur Aufnahme eines Ionenkristalls (6a) mit mehreren entlang der vordefinierten Linie (7) aufgereihten Ionen (6) zu erzeugen.

12. Quantencomputeranordnung (1) nach Anspruch 11 in Kombination mit Anspruch 9 oder 10, wobei

- jede äußere Elektrodenstruktur (42) mindestens fünf Elektroden (40a, 40b, 40c) umfasst,
- in jeder äußeren Elektrodenstruktur (42) mindestens eine erste Mittelelektrode (40b) und eine zweite Mittelelektrode (40b) unabhängig von einer dritten Mittelelektrode (40c), die zwischen der ersten und der zweiten Mittelelektrode (40b) angeordnet ist, steuerbar sind, um mindestens zwei elektrische Potentialtöpfe (W) zu erzeugen, die in einer Richtung parallel zu der vordefinierten Linie (7) hintereinander angeordnet sind, wobei jeder Potentialtopf (W) dazu eingerichtet ist, einen Ionenkristall (6a, 6b) aufzunehmen.

13. Quantencomputeranordnung (1) nach einem der vorhergehenden Ansprüche, umfassend

- mindestens zwei Permanentmagnetanordnungen (2), wobei
- die Permanentmagnetanordnungen (2) so eingerichtet sind, dass sie jeweils ein Magnetfeld erzeugen.

14. Quantencomputeranordnung (1) nach Anspruch 13 in Abhängigkeit von Anspruch 8, wobei

- jedem Ionenkristall (6a, 6b) eine individuelle Permanentmagnetanordnung (2) zugeordnet ist,
- jede Permanentmagnetanordnung (2) so eingerichtet ist, dass sich eine Größe ihres Magnetfeldes entlang der vordefinierten Linie (7) des zugeordneten Ionenkristalls (6a, 6b) ändert.

15. Quantencomputer (8), umfassend eine Quantencomputeranordnung (1) nach einem der Ansprüche 1 bis 14, der zur Durchführung von Quantenberechnungen eingerichtet ist, wobei der Quantencomputer (8) insbesondere ferner ein laserbasiertes Kühl- und/oder Auslesesystem umfasst.

**Revendications**

1. Dispositif de calcul quantique (1), comprenant

- un agencement d'aimants permanents (2),
- un substrat (50),

dans lequel

- le dispositif de calcul quantique (1) est configuré pour réaliser un piège de Paul planaire (100) destiné à piéger au moins un cristal d'ions (6a, 6b) comprenant plusieurs ions (6) alignés le long d'une ligne prédéfinie (7),
- des composants du dispositif de calcul quantique (1) qui constituent des électrodes (20, 30, 40a, 40b) du piège de Paul planaire (100) pour produire un potentiel de piégeage électrique sont disposés sur une face supérieure (51) du substrat (50),
- la ligne prédéfinie (7) est située au-dessus de la face supérieure (51),
- l'agencement d'aimants permanents (2) établit un champ magnétique dont la magnitude du champ magnétique varie le long de la ligne prédéfinie (7),
- l'agencement d'aimants permanents (2) comprend une pluralité de segments aimantés de manière permanente (3),
- chaque segment (3) présente une direction de magnétisation (4), et
- les segments (3) sont disposés selon un agencement de Halbach.

2. Dispositif de calcul quantique (1) selon la revendication 1,

- dans lequel l'agencement d'aimants permanents (2) entoure le piège de Paul planaire (100) sous la forme d'un anneau ou sous la forme du contour d'un polygone.

3. Dispositif de calcul quantique (1) selon la revendication 1, dans lequel

- toutes les électrodes (20, 30, 40a, 40b) du piège de Paul planaire (100) sont disposées dans un plan d'électrodes commun (EP).

4. Dispositif de calcul quantique (1) selon l'une quelconque des revendications précédentes, dans lequel

- au moins une partie de l'agencement d'aimants permanents (2) est disposée dans le substrat (50).

5. Dispositif de calcul quantique (1) selon l'une quelconque des revendications précédentes, comprenant en outre

- une structure de culasse (60) destinée à augmenter le champ magnétique et/ou la variation de la magnitude du champ magnétique le long de la ligne prédéfinie (7) établi par l'agencement d'aimants permanents (2).

6. Dispositif de calcul quantique (1) selon l'une quelconque des revendications précédentes, dans lequel

- la structure de culasse (60) est disposée dans le substrat (50).

7. Dispositif de calcul quantique (1) selon la revendication 5 ou 6, dans lequel

- la structure de culasse (60) comprend un matériau magnétique doux.

8. Dispositif de calcul quantique (1) selon l'une quelconque des revendications précédentes, dans lequel

- le piège de Paul planaire (100) est un piège de Paul planaire segmenté (100) configuré pour produire plusieurs puits de potentiel électriques (W), chaque puits de potentiel (W) étant configuré pour héberger un cristal d'ions (6a, 6b) comprenant plusieurs ions (6) alignés le long d'une ligne prédéfinie (7).

9. Dispositif de calcul quantique (1) selon la revendication 8, dans lequel

- le dispositif de calcul quantique (1) est configuré pour permettre une interaction entre les cristaux d'ions (6a, 6b) par transport d'ions et/ou par liaisons photoniques.

10. Dispositif de calcul quantique (1) selon la revendication 8 ou 9, dans lequel le piège de Paul planaire segmenté (100) est configuré

- pour fusionner deux puits de potentiel électriques adjacents (W) en un puits de potentiel électrique plus grand (W) et/ou
- pour diviser un puits de potentiel électrique (W) en deux puits de potentiel électriques plus petits adjacents (W).

11. Dispositif de calcul quantique (1) selon l'une quelconque des revendications précédentes, dans lequel

- le piège de Paul planaire (100) comprend une structure d'électrodes interne (32), deux structures d'électrodes externes (42) et deux structures d'électrodes intermédiaires (22),
- la structure d'électrodes interne (32) est disposée entre les structures d'électrodes intermédiaires (22), et les structures d'électrodes intermédiaires (22) sont disposées entre les structures d'électrodes externes (42),
- les structures d'électrodes (22, 32, 42) s'étendent parallèlement à la ligne prédéfinie (7),
- les structures d'électrodes externes (42) comprennent chacune au moins trois électrodes (40a, 40b), à savoir deux électrodes d'extrémité (40a) et au moins une électrode centrale (40b) disposée entre les électrodes d'extrémité (40a) dans une direction parallèle à la ligne prédéfinie (7),
- la structure d'électrodes interne (32) comprend au moins une électrode (30) et les structures d'électrodes intermédiaires (22) comprennent chacune au moins une électrode (20),
- les structures d'électrodes intermédiaires (22) sont des structures d'électrodes RF destinées à être alimentées par une tension alternative,
- dans chaque structure d'électrodes externe (42), l'au moins une électrode centrale (40b) peut être commandée indépendamment des électrodes d'extrémité (40a) afin de produire au moins un puits de potentiel électrique (W) destiné à héberger un cristal d'ions (6a) comportant plusieurs ions (6) alignés le long de la ligne prédéfinie (7).

12. Dispositif de calcul quantique (1) selon la revendication 11 en combinaison avec la revendication 9 ou 10, dans lequel

- chaque structure d'électrodes externe (42) comprend au moins cinq électrodes (40a, 40b, 40c),
- dans chaque structure d'électrodes externe (42), au moins une première électrode centrale (40b) et une seconde électrode centrale (40b) peuvent être commandées indépendamment d'une troisième électrode centrale (40c) disposée entre la première et la seconde électrode centrale (40b) afin de produire au moins deux puits de potentiel électriques (W) disposés successivement dans une direction parallèle à la ligne prédéfinie (7), chaque puits de potentiel (W) étant configuré pour héberger un cristal d'ions (6a, 6b).

13. Dispositif de calcul quantique (1) selon l'une quelconque des revendications précédentes, comprenant

   - au moins deux agencements d'aimants permanents (2),

   dans lequel

   - les agencements d'aimants permanents (2) sont configurés de sorte que chacun produise un champ magnétique.

14. Dispositif de calcul quantique (1) selon la revendication 13 en dépendance de la revendication 8, dans lequel

   - chaque cristal d'ions (6a, 6b) se voit attribuer un agencement d'aimants permanents individuel (2),
   - chaque agencement d'aimants permanents (2) est configuré de sorte que la magnitude de son champ magnétique varie le long de la ligne prédéfinie (7) du cristal d'ions (6a, 6b) attribué.

15. Ordinateur quantique (8), comprenant un dispositif de calcul quantique (1) selon l'une quelconque des revendications 1 à 14, configuré pour effectuer des calculs quantiques, dans lequel l'ordinateur quantique (8) comprend en particulier en outre un système de refroidissement et/ou de lecture basé sur des lasers.

Fig. 1

Fig. 2

Fig. 3

Fig. 4

Fig. 5

Fig. 6

Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021319999 A1

**Non-patent literature cited in the description**

- **YUJI KAWAI et al.** *Surface-electrode trap with an Integrated permanent magnet for generating a magnetic-field gradient at trapped ions*, 22 December 2016

- **RICHARD C THOMPSON**. *Ion Coulomb Crystals*, 18 November 2014
- **KUNLING WANG et al.** *Quantum gates using electronic and nuclear spins of YbA+ in a magnetic field gradient*, 02 January 2011